# EUROPÄISCHE PATENTSCHRIFT

(11) **EP 1 619 785 B1**
(45) Veröffentlichungstag und Bekanntmachung des Hinweises auf die Patenterteilung: **29.10.2008**
(21) Anmeldenummer: 05405380.6
(22) Anmeldetag: 13.06.2005
(51) Int. Cl.: H02M 7/48

(54) **Spannungsanstiegsbegrenzte Umrichterschaltung**
Converter circuit with voltage rise rate limitation
Circuit convertisseur avec limitation de la pente du front de tension

(30) Priorität: 20.07.2004 DE 102004034947
(43) Veröffentlichungstag der Anmeldung: 25.01.2006
(73) Patentinhaber: ABB Schweiz AG, 5400 Baden (CH)
(72) Erfinder: Oedegard, Bjoern, CH-5300 Turgi (CH); Apeldoorn, Oscar, CH-5426 Lengnau (CH)
(74) Vertreter: ABB Patent Attorneys

(56) Entgegenhaltungen:
- EP-A- 0 299 339
- EP-A- 0 321 865
- EP-A- 1 047 180
- US-A- 5 535 114
- YUAN X ET AL: "Evaluation of soft switching techniques for the neutral-point-clamped (NPC) inverter" POWER ELECTRONICS SPECIALISTS CONFERENCE, 1999. PESC 99. 30TH ANNUAL IEEE CHARLESTON, SC, USA 27 JUNE-1 JULY 1999, PISCATAWAY, NJ, USA,IEEE, US, Bd. 2, 27. Juni 1999 (1999-06-27), Seiten 659-664, XP010346776 ISBN: 0-7803-5421-4

## Beschreibung

### Technisches Gebiet

Die Erfindung bezieht sich auf das Gebiet der Leistungselektronik. Sie geht aus von einer Umrichterschaltung gemäss dem Oberbegriff des Anspruchs 1.

### Stand der Technik

Leistungshalbleiterschalter, insbesondere integrierte Thyristoren mit kommutierter Ansteuerelektrode (IGCT), werden derzeit vermehrt in der Umrichtertechnik und insbesondere in Umrichterschaltungen zur Schaltung von drei Spannungsniveaus eingesetzt. Eine solche Umrichterschaltung zur Schaltung von drei Spannungsniveaus ist in "Characterization of IGCTs for Series Connected Operation, Conference Record of Annual Meeting of IEEE Industry Applications Society, 2000, October". Darin umfasst die Umrichterschaltung einen durch zwei in Serie geschaltete Kondensatoren gebildeten Gleichspannungskreis, wobei der Gleichspannungskreis einen ersten Hauptanschluss und einen zweiten Hauptanschluss und einen durch die zwei benachbarten und miteinander verbundenen Kondensatoren gebildeten Teilanschluss aufweist. Der Kapazitätswert der beiden Kondensatoren ist üblicherweise gleich gross gewählt. Zwischen dem ersten Hauptanschluss und dem zweiten Hauptanschluss liegt eine Gleichspannung an, wobei zwischen dem ersten Hauptanschluss und dem Teilanschluss, d.h. am einen Kondensator folglich die halbe Gleichspannung anliegt und zwischen dem Teilanschluss und dem zweiten Hauptanschluss, d.h. am anderen Kondensator folglich ebenfalls die halbe Gleichspannung an.

Ferner weist die Umrichterschaltung ein erstes Stromanstiegsbegrenzungsnetzwerk auf, wobei eine Induktivität und ein Widerstand des ersten Stromanstiegsbegrenzungsnetzwerks mit dem ersten Hauptanschluss verbunden ist, eine Kapazität des ersten Stromanstiegsbegrenzungsnetzwerks mit dem Widerstand und mit dem Teilanschluss verbunden ist und eine Diode des ersten Stromanstiegsbegrenzungsnetzwerks mit dem Verbindungspunkt des Widerstands mit der Kapazität verbunden ist. Desweiteren weist die Umrichterschaltung ein zweites Stromanstiegsbegrenzungsnetzwerk auf, wobei eine Induktivität und ein Widerstand des zweiten Stromanstiegsbegrenzungsnetzwerks mit dem zweiten Hauptanschluss verbunden ist, eine Kapazität des zweiten Stromanstiegsbegrenzungsnetzwerks mit dem Widerstand und mit dem Teilanschluss verbunden ist und eine Diode des zweiten Stromanstiegsbegrenzungsnetzwerks mit dem Verbindungspunkt des Widerstands mit der Kapazität verbunden ist. Darüber hinaus ist ein erster, zweiter, dritter, vierter, fünfter und sechster ansteuerbarer bidirektionaler Leistungshalbleiterschalter vorgesehen, wobei der erste, zweite, dritte und vierte Leistungshalbleiterschalter in Serie geschaltet sind und der erste Leistungshalbleiterschalter mit der Induktivität des ersten Stromanstiegsbegrenzungsnetzwerks und der vierte Leistungshalbleiterschalter mit der Induktivität des zweiten Stromanstiegsbegrenzungsnetzwerks verbunden ist. Der fünfte und sechste Leistungshalbleiterschalter ist in Serie geschaltet, wobei der Verbindungspunkt des fünften Leistungshalbleiterschalters mit dem sechsten Leistungshalbleiterschalter mit dem Teilanschluss verbunden ist, der fünfte Leistungshalbleiterschalter mit dem Verbindungspunkt des ersten Leistungshalbleiterschalters mit dem zweiten Leistungshalbleiterschalter verbunden ist und der sechste Leistungshalbleiterschalter mit dem Verbindungspunkt des dritten Leistungshalbleiterschalters mit dem vierten Leistungshalbleiterschalter verbunden ist.

Zum ersten, zweiten, dritten, vierten, fünften und sechsten ansteuerbaren bidirektionalen Leistungshalbleiterschalter ist jeweils eine Serienschaltung eines Widerstands mit einer Kapazität parallel geschaltet, wobei die Kapazität einen Wert von typischerweise 500nF und der Widerstand einen Wert typischerweise 10hm aufweist. Die jeweilige Serienschaltung des Widerstands mit der Kapazität mit der vorstehend erwähnten wertemässigen Auslegung dient dazu, eine ausgeglichene Spannungsverteilung an dem zugehörigen Leistungshalbleiterschalter bei Schaltzustandsübergängen, d.h. beim Übergang vom eingeschalteten Zustand zum ausgeschalteten Zustand oder vom ausgeschalteten Zustand zum eingeschalteten Zustand, zu erreichen.

Problematisch bei einer Umrichterschaltung nach "Characterization of IGCTs for Series Connected Operation, Conference Record of Annual Meeting of IEEE Industry Applications Society, 2000, October" ist, dass durch die beschriebene wertemässige Auslegung des Widerstands und der Kapazität der Serienschaltung bei der Abschaltung des zugehörigen Leistungshalbleiterschalters ein hoher Spannungsanstieg bei gleichzeitig hohem Strom auftritt, was zu sehr hohen Abschaltverlusten und dynamischen Überhöhungen des elektrischen Fel im Leistungshalbleiterschalter führt. Solche Abschaltverluste und Feldüberhöhungen am jeweiligen Leistungshalbleiterschalter können aber diesen beschädigen oder gar zerstören.

EP 0 321 865 beschreibt eine Umrichterschaltung, wo die fünfte und sechste Leistungshalbleiterschalter von Dioden ersetzt werden. Diese Dioden erlauben der Strom nur einer Richtung zu führen. EP 1 047 180 beschreibt eine Umrichterschaltung mit Kapazitäten, die als Spannungsanstiegsbegrenzungsnetwerk für jede Leitungshalbleiterschalter benutzt werden.

### Darstellung der Erfindung

Aufgabe der Erfindung ist es deshalb, eine Umrichterschaltung der eingangs genannten Art derart weiterzuentwickeln, dass die Abschaltverluste an Leistungshalbleiterschaltern der Umrichterschaltung minimiert werden können. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung umfasst einen durch zwei in Serie geschaltete Kondensatoren gebildeten Gleichspannungskreis, wobei der Gleichspannungskreis einen ersten Hauptanschluss und einen zweiten Hauptanschluss und einen durch die zwei benachbarten und miteinander verbundenen Kondensatoren gebildeten Teilanschluss aufweist. Ferner ist ein erstes Stromanstiegsbegrenzungsnetzwerk vorgesehen, wobei eine Induktivität und ein Widerstand des ersten Stromanstiegsbegrenzungsnetzwerks mit dem ersten Hauptanschluss verbunden ist, eine Kapazität des ersten Stromanstiegsbegrenzungsnetzwerks mit dem Widerstand und mit dem Teilanschluss verbunden ist und eine Diode des ersten Stromanstiegsbegrenzungsnetzwerks mit dem Verbindungspunkt des Widerstands mit der Kapazität verbunden ist. Desweiteren weist die erfindungsgemässe Umrichterschaltung ein zweites Stromanstiegsbegrenzungsnetzwerk auf, wobei eine Induktivität und ein Widerstand des zweiten Stromanstiegsbegrenzungsnetzwerks mit dem zweiten Hauptanschluss verbunden ist, eine Kapazität des zweiten Stromanstiegsbegrenzungsnetzwerks mit dem Widerstand und mit dem Teilanschluss verbunden ist und eine Diode des zweiten Stromanstiegsbegrenzungsnetzwerks mit dem Verbindungspunkt des Widerstands mit der Kapazität verbunden ist. Darüber hinaus ist ein erster, zweiter, dritter, vierter, fünfter und sechster ansteuerbarer bidirektionaler Leistungshalbleiterschalter vorgesehen, wobei der erste, zweite, dritte und vierte Leistungshalbleiterschalter in Serie geschaltet sind und der erste Leistungshalbleiterschalter mit der Induktivität des ersten Stromanstiegsbegrenzungsnetzwerks und der vierte Leistungshalbleiterschalter mit der Induktivität des zweiten Stromanstiegsbegrenzungsnetzwerks verbunden ist. Der fünfte und sechste Leistungshalbleiterschalter ist in Serie geschaltet, wobei der Verbindungspunkt des fünften Leistungshalbleiterschalters mit dem sechsten Leistungshalbleiterschalter mit dem Teilanschluss verbunden ist, der fünfte Leistungshalbleiterschalter mit dem Verbindungspunkt des ersten Leistungshalbleiterschalters mit dem zweiten Leistungshalbleiterschalter verbunden ist und der sechste Leistungshalbleiterschalter mit dem Verbindungspunkt des dritten Leistungshalbleiterschalters mit dem vierten Leistungshalbleiterschalter verbunden ist. Erfindungsgemäss ist ein erstes Spannungsanstiegsbegrenzungsnetzwerk parallel zur Serienschaltung des ersten und zweiten Leistungshalbleiterschalters geschaltet und mit der Diode des ersten Stromanstiegsbegrenzungsnetzwerks verbunden. Weiterhin ist erfindungsgemäss ein zweites Spannungsanstiegsbegrenzungsnetzwerk parallel zur Serienschaltung des dritten und vierten Leistungshalbleiterschalters geschaltet und mit der Diode des zweiten Stromanstiegsbegrenzungsnetzwerks verbunden.

Vorteilhaft ist es mittels des erfindungsgemässen ersten und zweiten Spannungsanstiegsbegrenzungsnetzwerks möglich, den Spannungsanstieg bei der Abschaltung des ersten, zweiten, dritten, vierten, fünften und sechsten Leistungshalbleiterschalters zu begrenzen, was zu einer signifikanten Verringerung der Abschaltverluste sowie einer signifikanten Erhöhung des maximal abschaltbaren Stromes im Leistungshalbleiterschalter führt. Der jeweilige Leistungshalbleiterschalter kann dadurch weitestgehend vor einer Beschädigung oder Zerstörung geschützt werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung und
- Fig. 2: eine zweite Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

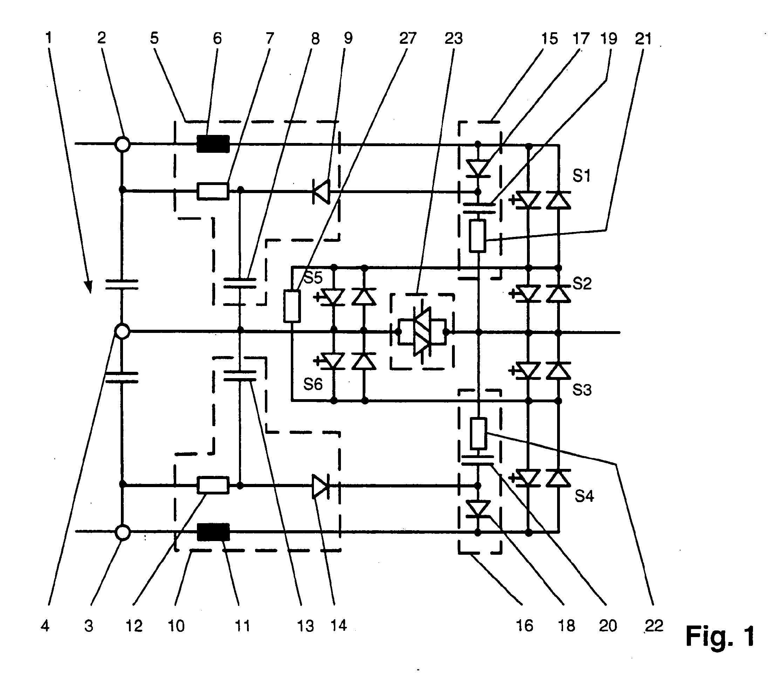

In Fig. 1 ist eine erste Ausführungsform der erfindungsgemässen Umrichterschaltung gezeigt. Die Umrichterschaltung gemäss Fig. 1 umfasst einen durch zwei in Serie geschaltete Kondensatoren gebildeten Gleichspannungskreis 1, wobei der Gleichspannungskreis 1 einen ersten Hauptanschluss 2 und einen zweiten Hauptanschluss 3 und einen durch die zwei benachbarten und miteinander verbundenen Kondensatoren gebildeten Teilanschluss 4 aufweist. Ferner ist bei der erfindungsgemässen Umrichterschaltung nach Fig. 1 ein erstes Stromanstiegsbegrenzungsnetzwerk 5 vorgesehen, wobei gemäss Fig. 1 eine Induktivität 6 und ein Widerstand 7 des ersten Stromanstiegsbegrenzungsnetzwerks 5 mit dem ersten Hauptanschluss 2 verbunden ist, eine Kapazität 8 des ersten Stromanstiegsbegrenzungsnetzwerks 5 mit dem Widerstand 7 und mit dem Teilanschluss 4 verbunden ist und eine Diode 9 des ersten Stromanstiegsbegrenzungsnetzwerks 5 mit dem Verbindungspunkt des Widerstands 7 mit der Kapazität 8 verbunden ist. Weiterhin ist gemäss Fig. 1 ein zweites Stromanstiegsbegrenzungsnetzwerk 10 vorgesehen, wobei eine Induktivität 11 und ein Widerstand 12 des zweiten Stromanstiegsbegrenzungsnetzwerks 10 mit dem zweiten Hauptanschluss 3 verbunden ist, eine Kapazität 13 des zweiten Stromanstiegsbegrenzungsnetzwerks 10 mit dem Widerstand 12 und mit dem Teilanschluss 4 verbunden ist und eine Diode 14 des zweiten Stromanstiegsbegrenzungsnetzwerks 10 mit dem Verbindungspunkt des Widerstands 12 mit der Kapazität 13 verbunden ist. Darüber hinaus weist die erfindungsgemässe Umrichterschaltung einen ersten, zweiten, dritten, vierten, fünften und sechsten ansteuerbaren bidirektionalen Leistungshalbleiterschalter S1, S2, S3, S4, S5, S6 auf. Der fünfte und sechste Leistungshalbleiterschalter S5 und S6 bildet eine aktive Klemmschaltgruppe. Vorzugsweise ist der erste, zweite, dritte, vierte, fünfte und sechste ansteuerbare bidirektionale Leistungshalbleiterschalter S1, S2, S3, S4, S5, S6 jeweils durch einen integrierten Thyristor mit kommutierter Ansteuerelektrode und durch eine zu dem Thyristor antiparallel geschaltete Diode gebildet.

Gemäss Fig. 1 sind der erste, zweite, dritte und vierte Leistungshalbleiterschalter S1, S2, S3, S4 in Serie geschaltet und der erste Leistungshalbleiterschalter S1 ist mit der Induktivität 6 des ersten Stromanstiegsbegrenzungsnetzwerks 5 und der vierte Leistungshalbleiterschalter S4 mit der Induktivität 11 des zweiten Stromanstiegsbegrenzungsnetzwerks 10 verbunden. Desweiteren ist der fünfte und sechste Leistungshalbleiterschalter S5, S6 in Serie geschaltet, der Verbindungspunkt des fünften Leistungshalbleiterschalters S5 mit dem sechsten Leistungshalbleiterschalter S6 mit dem Teilanschluss 4 verbunden, der fünfte Leistungshalbleiterschalter S6 mit dem Verbindungspunkt des ersten Leistungshalbleiterschalters S1 mit dem zweiten Leistungshalbleiterschalter S2 verbunden und der sechste Leistungshalbleiterschalter S6 mit dem Verbindungspunkt des dritten Leistungshalbleiterschalters S3 mit dem vierten Leistungshalbleiterschalter S4 verbunden. Erfindungsgemäss ein erstes Spannungsanstiegsbegrenzungsnetzwerk 15 parallel zur Serienschaltung des ersten und zweiten Leistungshalbleiterschalters S1, S2 geschaltet und mit der Diode 9 des ersten Stromanstiegsbegrenzungsnetzwerks 5 verbunden. Ferner ist ein zweites Spannungsanstiegsbegrenzungsnetzwerk 16 parallel zur Serienschaltung des dritten und vierten Leistungshalbleiterschalters S3, S4 geschaltet und mit der Diode 14 des zweiten Stromanstiegsbegrenzungsnetzwerks 10 verbunden.

Die beiden Spannungsanstiegsbegrenzungsnetzwerke 15, 16 bewirken beim Abschaltvorgang des ersten beziehungsweise zweiten, dritten, vierten, fünften und sechsten Leistungshalbleiterschalters S1, S2, S3, S4, S5 und S6, dass je einen Stromanteil in die Kapazitäten 19 und 20 der beiden Spannungsanstiegsbegrenzungsnetzwerke 15, 16 getrieben werden, so dass der Spannungsanstieg am ersten beziehungsweise zweiten, dritten, vierten, fünften und sechsten Leistungshalbleiterschalters S1, S2, S3, S4, S5 und S6 begrenzt wird. Die Begrenzung des Spannungsanstiegs führt vorteilhaft zu einer signifikanten Verringerung der Abschaltverluste sowie zu einer signifikanten Erhöhung des maximal abschaltbaren Stromes an den jeweiligen Leistungshalbleiterschaltern S1, S2, S3, S4, S5, S6 wodurch diese weitestgehend vor einer Beschädigung oder Zerstörung geschützt werden können.

Gemäss Fig. 1 ist das erste und zweite Spannungsanstiegsbegrenzungsnetzwerk 15, 16 vorzugsweise jeweils durch eine Serieschaltung einer Diode 17, 18, einer Kapazität 19, 20 und einem Widerstand 21, 22 gebildet. Die Diode 9 des ersten Stromanstiegsbegrenzungsnetzwerks 5 ist nach Fig. 1 mit dem Verbindungspunkt der Diode 17 mit der Kapazität 19 des ersten Spannungsanstiegsbegrenzungsnetzwerks 15 verbunden. Insbesondere ist die Diode 17 des ersten Spannungsanstiegsbegrenzungsnetzwerks 15 mit dem Verbindungspunkt des ersten Leistungshalbleiterschalters S1 mit der Induktivität 6 des ersten Stromanstiegsbegrenzungsnetzwerks 5 verbunden. Weiterhin ist die Diode 14 des zweiten Stromanstiegsbegrenzungsnetzwerks 10 gemäss Fig. 1 mit dem Verbindungspunkt der Diode 18 mit der Kapazität 20 des zweiten Spannungsanstiegsbegrenzungsnetzwerks 16 verbunden. Insbesondere ist die Diode 18 des zweiten Spannungsanstiegsbegrenzungsnetzwerks 16 mit dem Verbindungspunkt des vierten Leistungshalbleiterschalters S4 mit der Induktivität 11 des zweiten Stromanstiegsbegrenzungsnetzwerks 10 verbunden.

Gemäss Fig. 1 weist die erfindungsgemässe Umrichterschaltung ein ansteuerbares Kurzschlusselement 23 auf, welches mit dem Teilanschluss 4 und mit dem Verbindungspunkt des zweiten mit dem dritten Leistungshalbleiterschalter S2, S3 verbunden ist. Das ansteuerbare Kurzschlusselement 23 lässt sich somit sehr einfach in den bestehenden Verbund der Leistungshalbleiterschalter S1, S2, S3, S4, S5, S6 der Umrichterschaltung integrieren, so dass vorteilhaft Platz gespart werden kann. Das ansteuerbare Kurzschlusselement 23 dient bei einem Kurzschluss in einem oder mehreren der Leistungshalbleiterschalter S1, S2, S3, S4, S5, S6 dazu, dass ein durch den Kurzschluss bedingter Kurzschlussstrom aus den Kondensatoren des Gleichspannungskreises 1 nur sehr kurz über den oder die kurzschlussbehafteten Leistungshalbleiterschalter S1, S2, S3, S4, S5, S6 und dann über das Kurzschlusselement 23 zum Teilanschluss 4 gelenkt wird, damit das oder die kurzschlussbehafteten Leistungshalbleiterschalter S1, S2, S3, S4, S5, S6 nicht weiter beschädigt, belastet oder zerstört werden. Das ansteuerbare Kurzschlusselement 23 gemäss Fig. 1 dient zudem bei einem Kurzschluss an einer oder mehreren Phasen eines an die Umrichterschaltung angeschlossenen elektrischen Wechselspannungsnetzes dazu, dass ein durch den Kurzschluss bedingter Kurzschlussstrom aus den Phasen nicht oder nur mit einer kleinen Amplitude über die Leistungshalbleiterschalter S1, S2, S3, S4, S5, S6, insbesondere über die Dioden der die Leistungshalbleiterschalter S1, S2, S3, S4, S5, S6 fliesst, damit die Leistungshalbleiterschalter S1, S2, S3, S4, S5, S6 nicht weiter oder überhaupt nicht beschädigt, belastet oder zerstört werden. Ein solcher Kurzschlussstrom bzw. Fehlerstrom wird in diesem Fall über das Kurzschlusselement 17 zum Teilanschluss 4 gelenkt. Das Kurzschlusselement 23 wird dann angesteuert, wenn mittels einer Detektionseinrichtung ein Kurzschlussstrom detektiert wird.

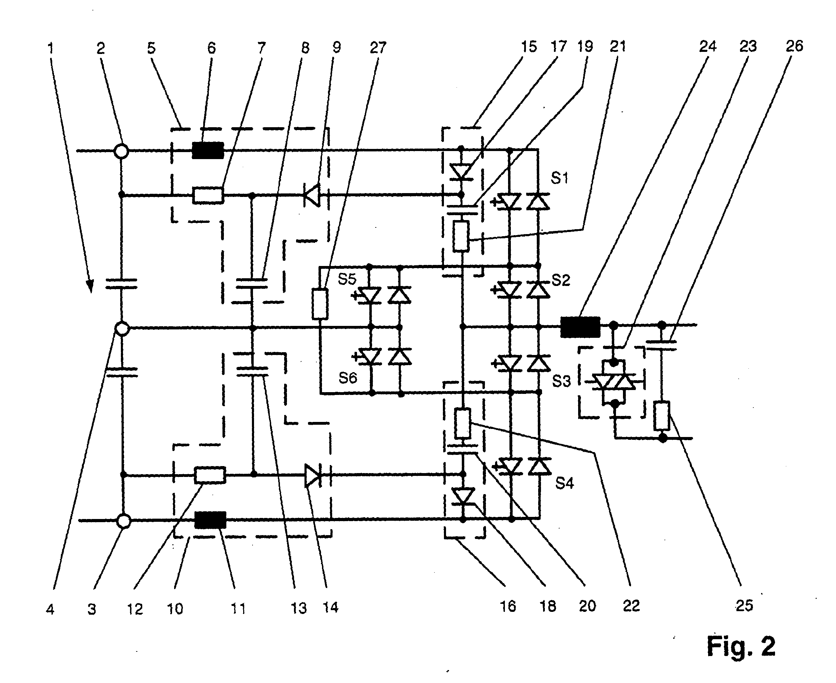

In Fig. 2 ist eine zweite Ausführungsform der erfindungsgemässen Umrichterschaltung gezeigt. Die zweite Ausführungsform gemäss Fig. 2 unterscheidet sich von der vorstehend detailliert beschriebenen ersten Ausführungsform gemäss Fig. 1 darin, dass ein ansteuerbares Kurzschlusselement vorgesehen ist, welches über eine Induktivität 24 mit dem Verbindungspunkt des zweiten mit dem dritten Leistungshalbleiterschalter S2, S3 verbunden ist, wobei eine Serienschaltung eines Widerstands 25 mit einer Kapazität 26 parallel zu dem ansteuerbaren Kurzschlusselement 23 geschaltet ist. Die Induktivität 24 und Serienschaltung des Widerstands 25 mit der Kapazität 26 sind optional. Die vorstehend beschriebene Verschaltung der Induktivität 24, des Widerstands 25 und der Kapazität 26 stellt beim Einschalten des Kurzschlusselementes 23 eine Stromanstiegsbegrenzungseinrichtung, d.h. der Stromanstieg beim Einschalten wird begrenzt, sowie beim Abschalten des Kurzschlusselementes 23 eine Spannungsanstiegsbegrenzungseinrichtung, d.h. der Spannungsanstieg beim Abschalten wird begrenzt, dar. Dieses ansteuerbare Kurzschlusselement 23 gemäss Fig. 2 dient bei einem Kurzschluss an einer oder mehreren Phasen eines an die Umrichterschaltung angeschlossenen elektrischen Wechselspannungsnetzes dazu, dass ein durch den Kurzschluss bedingter Kurzschlussstrom aus den Phasen nicht oder nur mit einer kleinen Amplitude über die Leistungshalbleiterschalter S1, S2, S3, S4, S5, S6, insbesondere über die Dioden der die Leistungshalbleiterschalter S1, S2, S3, S4, S5, S6 fliesst, damit die Leistungshalbleiterschalter S1, S2, S3, S4, S5, S6 nicht weiter oder überhaupt nicht beschädigt, belastet oder zerstört werden. Das Kurzschlusselement 23 wird dann angesteuert, wenn mittels einer Detektionseinrichtung ein Kurzschlussstrom detektiert wird, wobei das ansteuerbare Kurzschlusselement 23 dann die jeweils mit dem Kurzschlusselement 23 verbundene Phasen kurzschliesst.

Das Kurzschlusselement 23 nach Fig. 1 und Fig. 2 ist mit Vorteil aus zwei antiparallel geschalteten ansteuerbaren Leistungshalbleitern mit jeweiliger Druckkontaktierung, wie beispielsweise Scheibenthyristoren oder GTOs, gebildet. Der jeweilige ansteuerbare Leistungshalbleiterschalter des ansteuerbaren Kurzschlusselementes 23 kann aber auch durch einen integrierten Thyristor mit kommutierter Ansteuerelektrode oder durch einen Triac gebildet sein.

Gemäss Fig. 1 und Fig. 2 ist parallel zur Serienschaltung des fünften und sechsten Leistungshalbleiterschalters S5, S6 ein Symmetrierungswiderstand 27 geschaltet. Der Symmetrierungswiderstand 27 dient mit Vorteil dazu, beispielsweise bei einem Abschaltvorgang sämtlicher Leistungshalbleiterschalter S1, S2, S3, S4, S5, S6 eine nahezu symmetrische Spannungsverteilung über den Leistungshalbleiterschalter S1, S2, S3, S4, S5, S6 zu erzielen und somit einzelne Leistungshalbleiterschalter S1, S2, S3, S4, S5, S6 vor zu grossen Spannungen zu schützen.

### Bezugszeichenliste

- 1: Gleichspannungskreis
- 2: erster Hauptanschluss
- 3: zweiter Hauptanschluss
- 4: Teilanschluss
- 5: erstes Stromanstiegsbegrenzungsnetzwerk
- 6: Induktivität des ersten Stromanstiegsbegrenzungsnetzwerks
- 7: Widerstand des ersten Stromanstiegsbegrenzungsnetzwerks
- 8: Kapazität des ersten Stromanstiegsbegrenzungsnetzwerks
- 9: Diode des ersten Stromanstiegsbegrenzungsnetzwerks
- 10: zweites Stromanstiegsbegrenzungsnetzwerk
- 11: Induktivität des zweiten Stromanstiegsbegrenzungsnetzwerks
- 12: Widerstand des zweiten Stromanstiegsbegrenzungsnetzwerks
- 13: Kapazität des zweiten Stromanstiegsbegrenzungsnetzwerks
- 14: Diode des zweiten Stromanstiegsbegrenzungsnetzwerks
- 15: erstes Spannungsanstiegsbegrenzungsnetzwerk
- 16: zweites Spannungsanstiegsbegrenzungsnetzwerk
- 17: Diode des ersten Spannungsanstiegsbegrenzungsnetzwerks
- 18: Diode des zweiten Spannungsanstiegsbegrenzungsnetzwerks
- 19: Kapazität des ersten Spannungsanstiegsbegrenzungsnetzwerks
- 20: Kapazität des zweiten Spannungsanstiegsbegrenzungsnetzwerks
- 21: Widerstand des ersten Spannungsanstiegsbegrenzungsnetzwerks
- 22: Widerstand des zweiten Spannungsanstiegsbegrenzungsnetzwerks
- 23: Kurzschlusselement
- 24: Induktivität
- 25: Widerstand
- 26: Kapazität
- 27: Symmetrierungswiderstand
- S1: erste Leistungshalbleiterschalter
- S2: zweiter Leistungshalbleiterschalter
- S3: dritter Leistungshalbleiterschalter
- S4: vierter Leistungshalbleiterschalter
- S5: fünfter Leistungshalbleiterschalter
- S6: sechster Leistungshalbleiterschalter

## Patentansprüche

1. Umrichterschaltung mit einem durch zwei in Serie geschaltete Kondensatoren gebildeten Gleichspannungskreis (1), wobei der Gleichspannungskreis (1) einen ersten Hauptanschluss (2) und einen zweiten Hauptanschluss (3) und einen durch die zwei benachbarten und miteinander verbundenen Kondensatoren gebildeten Teilanschluss (4) umfasst, mit einem ersten Stromanstiegsbegrenzungsnetzwerk (5), wobei eine Induktivität (6) und ein Widerstand (7) des ersten Stromanstiegsbegrenzungsnetzwerks (5) mit dem ersten Hauptanschluss (2) verbunden ist, eine Kapazität (8) des ersten Stromanstiegsbegrenzungsnetzwerks (5) mit dem Widerstand (7) und mit dem Teilanschluss (4) verbunden ist und eine Diode (9) des ersten Stromanstiegsbegrenzungsnetzwerks (5) mit dem Verbindungspunkt des Widerstands (7) mit der Kapazität (8) verbunden ist,
mit einem zweiten Stromanstiegsbegrenzungsnetzwerk (10), wobei eine Induktivität (11) und ein Widerstand (12) des zweiten Stromanstiegsbegrenzungsnetzwerks (10) mit dem zweiten Hauptanschluss (3) verbunden ist, eine Kapazität (13) des zweiten Stromanstiegsbegrenzungsnetzwerks (10) mit dem Widerstand (12) und mit dem Teilanschluss (4) verbunden ist und eine Diode (14) des zweiten Stromanstiegsbegrenzungsnetzwerks (10) mit dem Verbindungspunkt des Widerstands (12) mit der Kapazität (13) verbunden ist,
mit einem ersten, zweiten, dritten, vierten, fünften und sechsten ansteuerbaren bidirektionalen Leistungshalbleiterschalter (S1, S2, S3, S4, S5, S6), wobei der erste, zweite, dritte und vierte Leistungshalbleiterschalter (S1, S2, S3, S4) in Serie geschaltet sind und der erste Leistungshalbleiterschalter (S1) mit der Induktivität (6) des ersten Stromanstiegsbegrenzungsnetzwerks (5) und der vierte Leistungshalbleiterschalter (S4) mit der Induktivität (11) des zweiten Stromanstiegsbegrenzungsnetzwerks (10) verbunden ist, und wobei ein erstes Spannungsanstiegsbegrenzungsnetzwerk (15) parallel zur Serienschaltung des ersten und zweiten Leistungshalbleiterschalters (S1, S2) geschaltet ist und mit der Diode (9) des ersten Stromanstiegsbegrenzungsnetzwerks (5) verbunden ist, und dass ein zweites Spannungsanstiegsbegrenzungsnetzwerk (16) parallel zur Serienschaltung des dritten und vierten Leistungshalbleiterschalters (S3, S4) geschaltet ist und mit der Diode (14) des zweiten Stromanstiegsbegrenzungsnetzwerks (10) verbunden ist, **dadurch gekennzeichnet,**
**dass** der fünfte und sechste Leistungshalbleiterschalter (S5, S6) in Serie geschaltet ist, der Verbindungspunkt des fünften Leistungshalbleiterschalters (S5) mit dem sechsten Leistungshalbleiterschalter (S6) mit dem Teilanschluss (4) verbunden ist, der fünfte Leistungshalbleiterschalter (S5) mit dem Verbindungspunkt des ersten Leistungshalbleiterschalters (S1) mit dem zweiten Leistungshalbleiterschalter (S2) verbunden ist und der sechste Leistungshalbleiterschalter (S6) mit dem Verbindungspunkt des dritten Leistungshalbleiterschalters (S3) mit dem vierten Leistungshalbleiterschalter (S4) verbunden ist, um von eines Beschädigung und Zerstörung zuschützen.

2. Umrichterschaltung nach Anspruch 1, **dadurch gekennzeichnet, dass** das erste und zweite Spannungsanstiegsbegrenzungsnetzwerk (15, 16) jeweils durch eine Serieschaltung einer Diode (17, 18), einer Kapazität (19, 20) und einem Widerstand (21, 22) gebildet ist.

3. Umrichterschaltung nach Anspruch 2, **dadurch gekennzeichnet, dass** die Diode (9) des ersten Stromanstiegsbegrenzungsnetzwerks (5) mit dem Verbindungspunkt der Diode (17) mit der Kapazität (19) des ersten Spannungsanstiegsbegrenzungsnetzwerks (15) verbunden ist, und
dass die Diode (14) des zweiten Stromanstiegsbegrenzungsnetzwerks (10) mit dem Verbindungspunkt der Diode (18) mit der Kapazität (20) des zweiten Spannungsanstiegsbegrenzungsnetzwerks (16) verbunden ist.

4. Umrichterschaltung nach einem der vorhergehenden Ansprüche, **dadurch gekennzeichnet, dass** der erste, zweite, dritte, vierte, fünfte und sechste ansteuerbaren bidirektionalen Leistungshalbleiterschalter (S1, S2, S3, S4, S5, S6) jeweils durch einen integrierten Thyristor mit kommutierter Ansteuerelektrode und durch eine zu dem Thyristor antiparallel geschaltete Diode gebildet ist.

5. Umrichterschaltung nach einem der Ansprüche 1 bis 4, **dadurch gekennzeichnet, dass** ein ansteuerbares Kurzschlusselement (23) mit dem Teilanschluss (4) und mit dem Verbindungspunkt des zweiten mit dem dritten Leistungshalbleiterschalter (S2, S3) verbunden ist.

6. Umrichterschaltung nach einem der Ansprüche 1 bis 4, **dadurch gekennzeichnet, dass** ein ansteuerbares Kurzschlusselement (23) vorgesehen ist, welches über eine Induktivität (24) mit dem Verbindungspunkt des zweiten mit dem dritten Leistungshalbleiterschalter (S2, S3) verbunden ist, und
dass eine Serienschaltung eines Widerstands (25) mit einer Kapazität (26) parallel zu dem ansteuerbaren Kurzschlusselement (23) geschaltet ist.

7. Umrichterschaltung nach Anspruch 5 oder 6, **dadurch gekennzeichnet, dass** das ansteuerbare Kurzschlusselement (23) aus zwei antiparallel geschalteten ansteuerbaren Leistungshalbleiterschaltern mit jeweiliger Druckkontaktierung gebildet ist.

8. Umrichterschaltung nach Anspruch 7, **dadurch gekennzeichnet, dass** der jeweilige ansteuerbare Leistungshalbleiterschalter des ansteuerbaren Kurzschlusselementes (23) durch einen integrierten Thyristor mit kommutierter Ansteuerelektrode gebildet ist.

9. Umrichterschaltung nach einem der vorhergehenden Ansprüche, **dadurch gekennzeichnet, dass** parallel zur Serienschaltung des fünften und sechsten Leistungshalbleiterschalters (S5, S6) ein Symmetrierungswiderstand (27) geschaltet ist.

## Claims

1. Converter circuit having a DC voltage circuit (1) which is formed by two capacitors which are connected in series, the DC voltage circuit (1) comprising a first main connection (2) and a second main connection (3) and a partial connection (4) which is formed by the two adjacent capacitors which are connected to one another, having a first current rise limiting network (5), an inductance (6) and a resistor (7) of the first current rise limiting network (5) being connected to the first main connection (2), a capacitance (8) of the first current rise limiting network (5) being connected to the resistor (7) and to the partial connection (4), and a diode (9) of the first current rise limiting network (5) being connected to the junction point between the resistor (7) and the capacitance (8),
having a second current rise limiting network (10), an inductance (11) and a resistor (12) of the second current rise limiting network (10) being connected to the second main connection (3), a capacitance (13) of the second current rise limiting network (10) being connected to the resistor (12) and to the partial connection (4), and a diode (14) of the second current rise limiting network (10) being connected to the junction point between the resistor (12) and the capacitance (13), having a first, a second, a third, a fourth, a fifth and a sixth drivable bidirectional power semiconductor switch (S1, S2, S3, S4, S5, S6), the first, second, third and fourth power semiconductor switches (S1, S2, S3, S4) being connected in series, and the first power semiconductor switch (S1) being connected to the inductance (6) of the first current rise limiting network (5), and the fourth power semiconductor switch (S4) being connected to the inductance (11) of the second current rise limiting network (10), and a first voltage rise limiting network (15) being connected in parallel with the series circuit comprising the first and second power semiconductor switches (S1, S2) and being connected to the diode (9) of the first current rise limiting network (5), and a second voltage rise limiting network (16) being connected in parallel with the series circuit comprising the third and fourth power semiconductor switches (S3, S4) and being connected to the diode (14) of the second current rise limiting network (10),
**characterized in that**
the fifth and sixth power semiconductor switches (S5, S6) are connected in series, the junction point between the fifth power semiconductor switch (S5) and the sixth power semiconductor switch (S6) is connected to the partial connection (4), the fifth power semiconductor switch (S5) is connected to the junction point between the first power semiconductor switch (S1) and the second power semiconductor switch (S2), and the sixth power semiconductor switch (S6) is connected to the junction point between the third power semiconductor switch (S3) and the fourth power semiconductor switch (S4) in order to protect against damage and destruction.

2. Converter circuit according to Claim 1, **characterized in that** the first and second voltage rise limiting networks (15, 16) are each formed by a series circuit comprising a diode (17, 18), a capacitance (19, 20) and a resistor (21, 22).

3. Converter circuit according to Claim 2, **characterized in that** the diode (9) of the first current rise limiting network (5) is connected to the junction point between the diode (17) and the capacitance (19) of the first voltage rise limiting network (15), and
**in that** the diode (14) of the second current rise limiting network (10) is connected to the junction point between the diode (18) and the capacitance (20) of the second voltage rise limiting network (16).

4. Converter circuit according to one of the preceding claims, **characterized in that** the first, second, third, fourth, fifth and sixth drivable bidirectional power semiconductor switches (S1, S2, S3, S4, S5, S6) are each formed by an integrated thyristor with a commutated drive electrode and by a diode which is connected back-to-back in parallel with the thyristor.

5. Converter circuit according to one of Claims 1 to 4, **characterized in that** a drivable short-circuiting element (23) is connected to the partial connection (4) and to the junction point between the second and third power semiconductor switches (S2, S3).

6. Converter circuit according to one of Claims 1 to 4, **characterized in that** provision is made of a drivable short-circuiting element (23) which is connected, via an inductance (24), to the junction point between the second and third power semiconductor switches (S2, S3), and **in that** a series circuit comprising a resistor (25) and a capacitance (26) is connected in parallel with the drivable short-circuiting element (23).

7. Converter circuit according to Claim 5 or 6, **characterized in that** the drivable short-circuiting element (23) is formed from two drivable power semiconductor switches which are connected back-to-back in parallel and each have pressure contact.

8. Converter circuit according to Claim 7, **characterized in that** the respective drivable power semiconductor switch of the drivable short-circuiting element (23) is formed by an integrated thyristor with a commutated drive electrode.

9. Converter circuit according to one of the preceding claims, **characterized in that** a balancing resistor (27) is connected in parallel with the series circuit comprising the fifth and sixth power semiconductor switches (S5, S6).

## Revendications

1. Circuit convertisseur comprenant un circuit à tension continue (1) formé par deux condensateurs branchés en série, le circuit à tension continue (1) comprenant une première borne principale (2) et une deuxième borne principale (3) ainsi qu'une borne intermédiaire (4) formée par les deux condensateurs voisins et reliés entre eux, comprenant un premier réseau de limitation de la croissance du courant (5), une inductance (6) et une résistance (7) du premier réseau de limitation de la croissance du courant (5) étant reliées avec la première borne principale (2), une capacitance (8) du premier réseau de limitation de la croissance du courant (5) étant reliée avec la résistance (7) et avec la borne intermédiaire (4) et une diode (9) du premier réseau de limitation de la croissance du courant (5) étant reliée avec le point de liaison de la résistance (7) avec la capacitance (8), comprenant un deuxième réseau de limitation de la croissance du courant (10), une inductance (11) et une résistance (12) du deuxième réseau de limitation de la croissance du courant (10) étant reliées avec la deuxième borne principale (3), une capacitance (13) du deuxième réseau de limitation de la croissance du courant (10) étant reliée avec la résistance (12) et avec la borne intermédiaire (4) et une diode (14) du deuxième réseau de limitation de la croissance du courant (10) étant reliée avec le point de liaison de la résistance (12) avec la capacitance (13), comprenant un premier, un deuxième, un troisième, un quatrième, un cinquième et un sixième commutateurs semiconducteurs de puissance (S1, S2, S3, S4, S5, S6) bidirectionnels commandables, le premier, le deuxième, le troisième et le quatrième commutateurs semiconducteurs de puissance (S1, S2, S3, S4) étant branchés en série et le premier commutateur semiconducteur de puissance (S1) étant relié avec l'inductance (6) du premier réseau de limitation de la croissance du courant (5) et le quatrième commutateur semiconducteur de puissance (S4) étant relié avec l'inductance (11) du deuxième réseau de limitation de la croissance du courant (10), un premier réseau de limitation de la croissance de la tension (15) étant branché en parallèle avec le circuit série constitué du premier et du deuxième commutateurs semiconducteurs de puissance (S1, S2) et étant relié avec la diode (9) du premier réseau de limitation de la croissance du courant (5) et un deuxième réseau de limitation de la croissance de la tension (16) étant branché en parallèle avec le circuit série constitué du troisième et du quatrième commutateurs semiconducteurs de puissance (S3, S4) et étant relié avec la diode (14) du deuxième réseau de limitation de la croissance du courant (10), **caractérisé en ce que** le cinquième et le sixième commutateurs semiconducteurs de puissance (S5, S6) sont branchés en série, le point de liaison du cinquième commutateur semiconducteur de puissance (S5) avec le sixième commutateur semiconducteur de puissance (S6) est relié avec la borne intermédiaire (4), le cinquième commutateur semiconducteur de puissance (S5) est relié avec le point de liaison du premier commutateur semiconducteur de puissance (S1) avec le deuxième commutateur semiconducteur de puissance (S2) et le sixième commutateur semiconducteur de puissance (S6) est relié avec le point de liaison du troisième commutateur semiconducteur de puissance (S3) avec le quatrième commutateur semiconducteur de puissance (S4) afin de protéger contre un endommagement ou une destruction.

2. Circuit convertisseur selon la revendication 1, **caractérisé en ce que** le premier et le deuxième réseaux de limitation de la croissance de la tension (15, 16) sont respectivement formés par un circuit série constitué d'une diode (17, 18), d'une capacitance (19, 20) et d'une résistance (21, 22).

3. Circuit convertisseur selon la revendication 2, **caractérisé en ce que** la diode (9) du premier réseau de limitation de la croissance du courant (5) est reliée avec le point de liaison de la diode (17) avec la capacitance (19) du premier réseau de limitation de la croissance de la tension (15) et que la diode (14) du deuxième réseau de limitation de la croissance du courant (10) est reliée avec le point de liaison de la diode (18) avec la capacitance (20) du deuxième réseau de limitation de la croissance de la tension (16).

4. Circuit convertisseur selon l'une des revendications précédentes, **caractérisé en ce que** le premier, le deuxième, le troisième, le quatrième, le cinquième et le sixième commutateurs semiconducteurs de puissance (S1, S2, S3, S4, S5, S6) bidirectionnels commandables sont respectivement formés par un thyristor intégré muni d'une électrode d'amorçage commutée et par une diode branchée en antiparallèle avec le thyristor.

5. Circuit convertisseur selon l'une des revendications 1 à 4, **caractérisé en ce qu'**un élément de court-circuit commandable (23) est relié avec la borne intermédiaire (4) et avec le point de liaison du deuxième avec le troisième commutateurs semiconducteurs de puissance (S2, S3).

6. Circuit convertisseur selon l'une des revendications 1 à 4, **caractérisé en ce qu'**il est prévu un élément de court-circuit commandable (23) qui est relié par le biais d'une inductance (24) avec le point de liaison du deuxième avec le troisième commutateurs semiconducteurs de puissance (S2, S3) et qu'un circuit série constitué d'une résistance (25) et d'une capacitance (26) est branché en parallèle avec l'élément de court-circuit commandable (23).

7. Circuit convertisseur selon la revendication 5 ou 6, **caractérisé en ce que** l'élément de court-circuit commandable (23) est formé par deux commutateurs semiconducteurs de puissance commandables branchés en antiparallèle respectivement mis en contact par compression.

8. Circuit convertisseur selon la revendication 7, **caractérisé en ce que** chaque commutateur semiconducteur de puissance commandable de l'élément de court-circuit commandable (23) est formé par un thyristor intégré muni d'une électrode d'amorçage commutée.

9. Circuit convertisseur selon l'une des revendications précédentes, **caractérisé en ce qu'**une résistance d'équilibrage des circuits (27) est branchée en parallèle avec le circuit série constitué du cinquième et du sixième commutateurs semiconducteurs de puissance (S5, S6) .
